# EUROPÄISCHE PATENTANMELDUNG

(11) **EP 1 484 331 A1**
(43) Veröffentlichungstag der Anmeldung: **08.12.2004**
(21) Anmeldenummer: 04010820.1
(22) Anmeldetag: 06.05.2004
(51) Int. Cl.: C07F 7/18

(54) **Verfahren zur Herstellung von Isocyanatgruppen aufweisenden Organosiliciumverbindungen**

(30) Priorität: 05.06.2003 DE 10325608
(71) Anmelder: Wacker-Chemie GmbH, 81737 München (DE)
(72) Erfinder:
(74) Vertreter: Fritz, Helmut, Dr.

(57) **Zusammenfassung**

Gegenstand der Erfindung ist ein Verfahren zur Herstellung von Isocyanatgruppen aufweisenden Organosiliciumverbindungen, die aufgebaut sind aus Einheiten der allgemeinen Formel (Ia)

Rₐ(R¹O)_{b}X_{c}SiO_{(4-a-b-c)/2} (Ia),

bei dem Organosiliciumverbindungen, die aufgebaut sind aus Einheiten der allgemeinen Formel (Ib)

Rₐ(R¹O)_{b}Y_{c}SiO_{(4-a-b-c)/2} (Ib),

erhitzt werden, wobei
- X: einen SiC- oder SiOC-gebundenen Rest der allgemeinen Formel (IIa)

-(O)_{g}-Z-NCO (IIa),
- Y: einen SiC- oder SiOC-gebundenen Rest der allgemeinen Formel (IIb)

- (O)_{g}-Z-NH-C(O)OR² (IIb)
bedeuten und g, Z, R, R¹, R², a, b und c die in Anspruch 1 angegebebenen Bedeutungen aufweisen,
mit der Maßgabe, daß die Organosiliciumverbindungen aus Einheiten der allgemeinen Formel (Ib) einen Halogenid-Gehalt von höchstens 10000 Gewichts-ppm besitzen.

## Beschreibung

Die Erfindung betrifft ein Verfahren zur Herstellung von Isocyanatgruppen aufweisenden Organosiliciumverbindungen aus Carbamatogruppen aufweisenden Organosiliciumverbindungen mit geringem Halogenidgehalt.

Isocyanatgruppen aufweisende Organosiliciumverbindungen lassen sich in vielfältigen Anwendungen z. B. als Haftvermittler, Kupplungsreagenz, Quervernetzer oder Oberflächenmodifizierungsmittel in Dicht- und Klebstoffen, als Lackadditiwe usw. einsetzen.

Verschiedene Verfahren zur Synthese von Isocyanatgruppen aufweisenden Organosiliciumverbindungen sind bereits beschrieben worden, wie etwa die Reaktion von Trichlorsilan mit Allylisocyanat unter Pt-Katalyse, die jedoch nur in schlechten Ausbeuten abläuft und kostenintensive ungesättigte Isocyanate erfordert. In einem ähnlichen Verfahren stellt das mitunter sehr hohe Gefahrenpotential von Trialkoxysilanen (Disproportionierung bei Lagerung unter Bildung selbstentzündlicher Gase, Toxizität) außergewöhnlich hohe Anforderungen an die Prozeßführung, wodurch die Wirtschaftlichkeit zusätzlich eingeschränkt wird.

Daneben wurden Möglichkeiten beschrieben, durch Umsetzung von siliciumhaltigen Aminen mit Phosgen in Gegenwart verschiedener HCl-Akzeptoren zu entsprechenden Isocyanatverbindungen zu gelangen. Aufgrund der außerordentlich hohen Toxizität des Phosgens sind hierbei naturgemäß aufwendige Sicherheitsmaßnahmen zum Schutz von Mensch und Umwelt erforderlich.

Weiterhin finden in der Patentliteratur thermische Spaltungen von Carbamatgruppen aufweisenden Organosiliciumverbindungen bei Temperaturen ab ca. 300° C Erwähnung (z. B. US 5393910 A).

Unter Freisetzung äquimolarer Mengen eines Alkohols bilden sich in diesen Pyrolyse- oder Thermolysereaktionen die gewünschten Isocyanatgruppen aufweisenden Organosiliciumverbindungen.

Gegenstand der Erfindung ist ein Verfahren zur Herstellung von Isocyanatgruppen aufweisenden Organosiliciumverbindungen, die aufgebaut sind aus Einheiten der allgemeinen Formel (Ia)

Rₐ(R¹O)_{b}X_{c}SiO_{(4-a-b-c) /2} (Ia),

bei dem Organosiliciumverbindungen, die aufgebaut sind aus Einheiten der allgemeinen Formel (Ib)

Rₐ(R¹O)_{b}Y_{c}SiO_{(4-a-b-c) /2} (Ib),

erhitzt werden, wobei
- **X**: einen SiC- oder SiOC-gebundenen Rest der allgemeinen Formel (IIa)

-(O)_{g}-Z-NCO (IIa),
- **Y**: einen SiC- oder SiOC-gebundenen Rest der allgemeinen Formel (IIb)

-(O)_{g}-Z-NH-C(O)OR² (IIb)
- **g**: die Werte 0 oder 1
- **Z**: einen zweiwertigem, gegebenenfalls substituierten Kohlenwasserstoffrest, der mit O, S, N oder P unterbrochen sein kann,
- **R, R**^{**1**} **und R**^{**2**}: einen einwertigen, SiC-gebundenen, gegebenenfalls substituierten Kohlenwasserstoffrest, der durch O, S, N oder P unterbrochen sein kann,
- **a und b**: die Werte 0, 1, 2 oder 3 und
- **c**: die Werte 0, 1, 2, 3 oder 4 bedeuten,
mit der Maßgabe, daß die Summe a+b+c≤4 ist,
die Organosiliciumverbindungen aus Einheiten der allgemeinen Formel (Ia) mindestens einen Rest X aufweisen und
die Organosiliciumverbindungen aus Einheiten der allgemeinen Formel (Ib) mindestens einen Rest Y aufweisen sowie einen Halogenid-Gehalt von höchstens 10000 Gewichts-ppm besitzen.

Es wurde gefunden, daß bei Verfahren zur Herstellung von Isocyanatgruppen aufweisenden Organosiliciumverbindungen Selektivität und Ausbeute des Verfahrens und die Betriebsdauer bzw. Standzeit der verwendeten Vorrichtung, wie Pyrolyseapparatur sowie die Verwendbarkeit der gewünschten Produkte in deren Zielanwendungen sehr stark von der Qualität der eingesetzten Carbamatgruppen aufweisenden Organosiliciumverbindungen abhängen.

Weiterhin wurde nun festgestellt, daß sowohl verfahrenstechnische Aspekte, vor allem Selektivitäten, Umsätze, Anlagenstandzeiten, als auch die sich hierbei ergebenden Produktqualitäten der Organosiliciumverbindungen aus Einheiten der allgemeinen Formel (Ia) insbesondere dann ein Optimum erreichen, wenn die Carbamatgruppen aufweisenden Organosiliciumverbindungen aus Einheiten der allgemeinen Formel (Ib) frei von nicht verdampfbaren Nebenprodukten sind und insbesondere Halogenid-Gehalte von höchstens 10000 ppm, bevorzugt 5000 ppm, bevorzugt bevorzugt 1000 ppm, insbesondere 100 ppm aufweisen. Die wichtigsten Halogenide sind Chlorid, Bromid und Iodid.

Die aus halogenidarmen Organosiliciumverbindungen aus Einheiten der allgemeinen Formel (Ib) hergestellten Organosiliciumverbindungen aus Einheiten der allgemeinen Formel (Ia) zeigen in einer Reihe von Anwendungen z. T. erheblich bessere Eigenschaften gegenüber den aus halogenidreichen carbamathaltigen Organosiliciumverbindungen hergestellten Isocyanatgruppen aufweisenden Organosiliciumverbindungen, z. B. bei der Haftung von hieraus hergestellten Lack-Formulierungen oder Kleb- und Dichtstoffen auf metallischen Oberflächen. Darüber hinaus sind halogenidarme Organosiliciumverbindungen aus Einheiten der allgemeinen Formel (Ia) deutlich lagerstabiler gegenüber chemischer Veränderung (z. B. Reinheit, Verfärbung).

Bei dem Verfahren werden aus dem Rest Y der allgemeinen Formel (IIb) Alkohole der allgemeinen Formel **R**^{**2**}OH abgespalten. **R**^{**2**} ist vorzugsweise ein C₁-C₆-Alkylrest, insbesondere Propyl- Ethylund Methylrest.

Vorzugsweise sind die Organosiliciumverbindungen aufgebaut aus 1 bis 10 Einheiten, insbesondere 1 bis 3 Einheiten der allgemeinen Formeln (Ia) oder (Ib). Insbesondere ist die Summe a+b+c=4, d.h. die Organosiliciumverbindungen sind Silane.

Vorzugsweise weisen die Organosiliciumverbindungen aus Einheiten der allgemeinen Formel (Ia) 1 bis 10, insbesondere 1, 2 oder 3 Reste **X** auf.

Als Spacer **Z** zwischen den Organosiliciumgruppen bzw. den Isocyanatogruppen werden bevorzugt lineare oder verzweigte gesättigte oder ungesättige C₁-C₆-Kohlenwasserstoffgruppen eingesetzt. Bevorzugt sind Alkylreste, insbesondere lineare Alkylreste besonders Methylen, Ethylen und Propylen.

Reste **R** sind vorzugsweise C₁-C₁₈-Kohlenwasserstoffgruppen. Bevorzugte Substituenten an den Resten **R** sind Fluor, Chlor und Brom. Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylrest, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl- und der Allylrest, Cycloalkylreste, wie Cyclopentyl-, Cyclohexyl-, Cycloheptylreste und Methylcyclohexylreste, Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest, wobei der Methylrest, Ethylrest, n-Propylrest, Iso-Propylrest und n-Butylrest bevorzugt sind. Besonders bevorzugte Reste **R** sind Methylrest und Phenylrest.

**R**^{**1**} sind vorzugsweise C₁-C₁₀-Kohlenwasserstoffgruppen, insbesondere C₁-C₆-Alkylgruppen. Besonders bevorzugt sind Propyl- Ethyl- und Methylrest.

Die Organosiliciumverbindungen aus Einheiten der allgemeinen Formel (Ib) werden je nach Verfahrensführung bevorzugt auf eine Temperatur von 50 bis 600°C, besonders bevorzugt von 100 bis 500°C erhitzt.

Das Verfahren wird bevorzugt in einem Druckbereich von 0.01 - 100 bar, besonders bevorzugt bei 0.5 - 10 bar, insbesondere im Bereich von 0.5 - 1.5 bar durchgeführt.

Das Verfahren erfolgt beispielsweise als Pyrolyse- oder Thermolysereaktion. Es lässt sich mit Hilfe aller literaturbekannten technischen Ausführungen wie beispielsweise Bäder heißer Flüssigkeiten oder heiße Oberflächen aus Metall, Glas oder keramischen Werkstoffen durchführen sowie weiterhin mit hieraus gefertigten, dem technischen Stand entsprechenden Reaktoren, wie z. B. Rohrreaktoren, Rührreaktoren, Schleifenreaktoren, Kaskasdenreaktoren usw. Alle genannten Verfahren können kontinuierlich oder diskontinuierlich sowie auch in Anwesenheit von Katalysatoren durchgeführt werden.

Bevorzugte Apparaturen zur Durchführung des Verfahrens sind beispielsweise solche, bei denen die Organosiliciumverbindungen aus Einheiten der allgemeinen Formel (Ib) in heiße Flüssigkeiten eingetropft und die Organosiliciumverbindungen aus Einheiten der allgemeinen Formel (Ia) durch Destillation entfernt werden, weiterhin rohrförmige beheizbare Reaktoren aus Glas, Metallen oder anderen unter den Thermolysebedingungen beständigen Materialien wie z. B. Keramiken, die gegebenenfalls mit Füllkörpern gepackt sein können. Besonders bevorzugte Ausführungsformen sind ungefüllte und gefüllte metallische Rohre, die mit einem katalytisch wirksamen Medium beladen sind. Ferner gehören Rührreaktoren, aus denen die Organosiliciumverbindungen aus Einheiten der allgemeinen Formel (Ia) bei entsprechenden Temperaturen aus den vorgelegten Organosiliciumverbindungen aus Einheiten der allgemeinen Formel (Ib)im Zuge der Pyrolyse- oder Thermolysereaktion unmittelbar ausdestilliert werden können, zu den bevorzugten Ausführungsformen.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf Massenanteile bezogen, alle Drücke 0,10 MPa (abs.) und alle Temperaturen 20°C. Die Aufarbeitungen der Reaktionsmischungen zur Produktisolierung erfolgten mit den üblichen Methoden der Flüssigkeits-Trennung (kontinuierliche und diskontinuierliche Destillationen).

### Vergleichsbeispiel

100 g N-[(3-(Trimethoxysilyl)prop-1-yl)]-O-methylcarbamat mit einem Chlorid-Gehalt von 2% wurde so tropfenweise in ein auf 500° C beheiztes Stahlrohr der Länge 1,00 m und des Innendurchmessers 0,05 m eingebracht, bis das Ausgangsprodukt im austretenden Zielprodukt nicht mehr nachweisbar war (Analyse des austretenden Produkts mittles Gaschromatographie und ²⁹Si-NMR-Spektroskopie). Das erhaltene Rohprodukt wurde über eine 30cm-Füllkörper-Kolonne (Füllung: 3mm-Glasspiralen) aufdestilliert; hierbei wurden 48,8 g (3-Isocyanatopropyl)trimethoxysilan erhalten. Bereits nach wenigen Tagen der Lagerung trat eine deutliche Gelbfärbung verbunden mit einer entsprechenden Abnahme der Reinheit des Produkts auf.

Nach fünfzig Versuchen wurde das Stahlrohr aus der Apparatur ausgebaut und einer Sichtprüfung unterzogen. Neben schwarzen Verkrustungen waren deutliche Korrosionsspuren an dem Rohr sichtbar, die eine weitere Verwendung unmöglich machten.

### Beispiel 1

Das Vergleichsbeispiel wurde mit einem baugleichen Stahlrohr mit der Abänderung wiederholt, daß anstelle des N- [(3-(Trimethoxysilyl) prop-1-yl)] -O-methylcarbamats mit einem Chlorid-Gehalt von 2% ein Ausgangsprodukt mit einem Chlorid-Gehalt von 0,5% eingesetzt wurde. Nach destillativer Aufarbeitung wurden 61,2 g (3-Isocyanatopropyl) trimethoxysilan erhalten. Nach einigen Tagen der Lagerung trat eine leichte Gelbfärbung verbunden mit einer Abnahme der Reinheit des Produkts auf.

Nach fünfzig Versuchen wurde das Stahlrohr aus der Apparatur ausgebaut und einer Sichtprüfung unterzogen. Neben geringen Verkrustungen waren sehr geringe Korrosionsspuren an dem Rohr sichtbar.

### Beispiel 2

Das Vergleichsbeispiel wurde mit einem baugleichen Stahlrohr mit der Abänderung wiederholt, daß anstelle des N-[(3-(Trimethoxysilyl)prop-1-yl)]-O-methylcarbamats mit einem Chlorid-Gehalt von 2% ein Ausgangsprodukt mit einem Chlorid-Gehalt von 100 ppm eingesetzt wurde. Nach destillativer Aufarbeitung wurden 81,8 g (3-Isocyanatopropyl)trimethoxysilan erhalten.

Nach fünfzig Versuchen wurde das Stahlrohr aus der Apparatur ausgebaut und einer Sichtprüfung unterzogen. Es waren weder Verkrustungen noch Korrosionsspuren an dem Rohr erkennbar. Auch nach mehrwöchiger Lagerung zeigte das Produkt keinerlei Farbveränderungen.

## Patentansprüche

1. Verfahren zur Herstellung von Isocyanatgruppen aufweisenden Organosiliciumverbindungen, die aufgebaut sind aus Einheiten der allgemeinen Formel (Ia)
Rₐ(R¹O)_{b}X_{c}SiO_{(4-a-b-c) /2} (Ia),
bei dem Organosiliciumverbindungen, die aufgebaut sind aus Einheiten der allgemeinen Formel (Ib)
Rₐ(R¹O)_{b}Y_{c}SiO_{(4-a-b-c) /2} (Ib),
erhitzt werden, wobei
**X** einen SiC- oder SiOC-gebundenen Rest der allgemeinen Formel (IIa)
-(O)_{g}-Z-NCO (IIa),
**Y** einen SiC- oder SiOC-gebundenen Rest der allgemeinen Formel (IIb)
-(O)_{g}-Z-NH-C(O)OR² (IIb)
**g** die Werte 0 oder 1
**Z** einen zweiwertigem, gegebenenfalls substituierten Kohlenwasserstoffrest, der mit O, S, N oder P unterbrochen sein kann,
**R, R**^{**1**} **und R**^{**2**} einen einwertigen, SiC-gebundenen, gegebenenfalls substituierten Kohlenwasserstoffrest, der durch O, S, N oder P unterbrochen sein kann,
**a und b** die Werte 0, 1, 2 oder 3 und
**c** die Werte 0, 1, 2, 3 oder 4 bedeuten, mit der Maßgabe, daß die Summe a+b+c≤4 ist,
die Organosiliciumverbindungen aus Einheiten der allgemeinen Formel (Ia) mindestens einen Rest **X** aufweisen und die Organosiliciumverbindungen aus Einheiten der allgemeinen Formel (Ib) mindestens einen Rest **Y** aufweisen sowie einen Halogenid-Gehalt von höchstens 10000 Gewichts-ppm besitzen.

2. Verfahren nach Anspruch 1, bei dem **R**^{**2**} ein C₁-C₆-Alkylrest ist.

3. Verfahren nach Anspruch 1 oder 2, bei dem die Halogenide ausgewählt werden aus Chlorid, Bromid und Iodid.

4. Verfahren nach Anspruch 1 bis 3, bei dem der Spacer **Z** eine C₁-C₆-Kohlenwasserstoffgruppe ist.
